# EUROPEAN PATENT APPLICATION

(11) **EP 4 286 086 A1**
(43) Date of publication of application: **06.12.2023**
(21) Application number: 22745636.5
(22) Date of filing: 17.01.2022
(51) Int. Cl.: B23H 1/10, B23H 7/36

(54) **ELECTRICAL DISCHARGE MACHINE**

(30) Priority: 28.01.2021 JP 2021011586
(71) Applicant: FANUC CORPORATION, Oshino-mura Minamitsuru-gun Yamanashi 401-0597 (JP)
(72) Inventor: SUGANUMA, Ryousuke, Minamitsuru-gun, Yamanashi 401-0597 (JP)
(74) Representative: Schmidt, Steffen J.
(86) International application number: PCT/JP2022/001424
(87) International publication number: WO 2022/163413

(57) **Abstract**

According to one embodiment, an electrical discharge machine (10) comprises a pump (52) that supplies a liquid and introduction piping (54) that introduces liquid supplied by the pump (52) to a machining tank (46). The introduction piping (54) has a piping section (54PT) that is higher than the maximum allowed height for the liquid level in the machining tank (46). A through hole (54H) that passes through the pipe wall of the introduction piping (54) is provided in said piping section (54PT).

## Description

### TECHNICAL FIELD

The present invention relates to an electrical discharge machine that performs electrical discharge machining on a workpiece in a liquid stored in a work-pan.

### BACKGROUND ART

An electrical discharge machine is provided with a device for supplying liquid to be stored in a work-pan. JP 2017-019046 A discloses a dielectric working fluid supply device including a pump (circulation pump) and a first liquid circuit. The pump pumps liquid (clean water) from a fresh water tank. The first liquid circuit supplies the liquid pumped up by the pump to the work-pan. Although there is no specific description of the first liquid circuit in JP 2017-019046 A, piping is generally applied as the first liquid circuit. This piping is generally provided with a check valve for preventing the backflow from the work-pan.

### SUMMARY OF THE INVENTION

However, it is complicated to remove the check valve from the piping for the purpose of maintenance or the like.

An object of the present invention is to provide an electrical discharge machine that is capable of suppressing the backflow of a liquid from a work-pan without providing a check valve.

According to an aspect of the present invention, there is provided an electrical discharge machine that performs electrical discharge machining on a workpiece in a liquid stored in a work-pan, the electrical discharge machine including a pump configured to supply the liquid, an inlet pipe configured to introduce the liquid supplied by the pump into the work-pan, and a through hole configured to penetrate a pipe wall of the inlet pipe, wherein the inlet pipe includes a pipe portion that is higher than a maximum height of a water level allowed in the work-pan, and the through hole is provided in the pipe portion.

According to the aspect of the present invention, it is possible to suppress the backflow of the liquid from the work-pan without providing a check valve. That is, the pipe portion of the inlet pipe is higher than the maximum height of the water level allowed in the work-pan. With this configuration, when the pump is stopped, the liquid filling the flow path of the pipe portion flows out so as to drop from the through hole by its own weight, and air is accumulated in the flow path of the pipe portion. Therefore, the backflow from the work-pan can be suppressed by the air accumulated in the flow path of the pipe portion. In this way, the backflow of the liquid from the work-pan can be suppressed without providing a check valve.

### BRIEF DESCRIPTION OF DRAWINGS

FIG. 1 is a schematic diagram illustrating a configuration of an electrical discharge machine according to an embodiment;
FIG. 2 is a schematic diagram showing a configuration of a part of a dielectric fluid unit; and
FIG. 3 is a diagram illustrating a state in which liquid is supplied to a work-pan.

### DETAILED DESCRIPTION OF THE INVENTION

### [Embodiment]

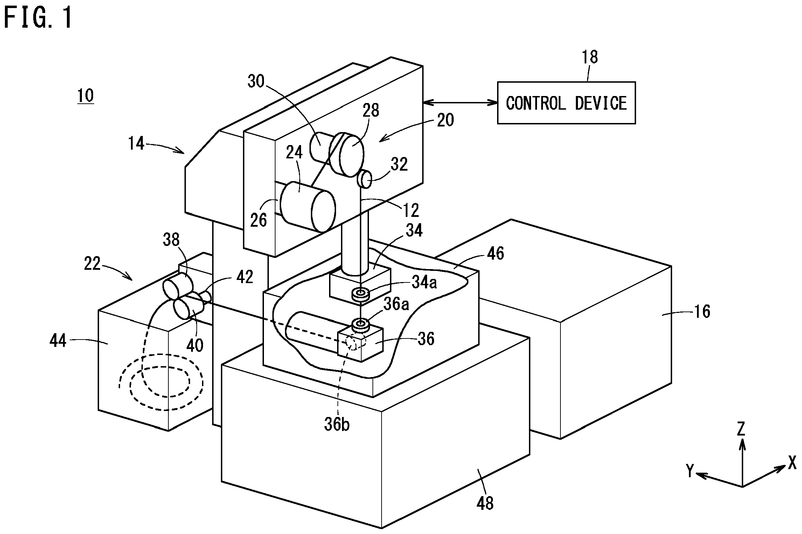

FIG. 1 is a schematic diagram illustrating a configuration of an electrical discharge machine 10 according to an embodiment. In FIG. 1, an X direction, a Y direction, and a Z direction are shown. Note that the X direction and the Y direction are orthogonal to each other on a plane, and the Z direction is orthogonal to each of the X direction and the Y direction.

The electrical discharge machine 10 is a machine that performs electrical discharge machining on a workpiece in a liquid. The electrical discharge machine 10 machines a workpiece by using electrical discharge generated in an electrode gap between the workpiece and a wire electrode 12 by applying a voltage in the electrode gap. The electrical discharge machine 10 includes a main machine body 14, a dielectric fluid unit 16, and a control device 18 for controlling the main machine body 14 and the dielectric fluid unit 16.

The material of the wire electrode 12, for example, is metal material such as tungsten-based, copper alloy-based, or brass-based material. On the other hand, the material of the workpiece, for example, is metallic material such as iron-based material or super hard material or the like.

The main machine body 14 includes a supplying system 20 that supplies the wire electrode 12 toward the workpiece (workpiece, object to be machined), and a collecting system 22 that collects the wire electrode 12 that has passed through the workpiece.

The supplying system 20 includes a wire bobbin 24, a torque motor 26, a brake shoe 28, a brake motor 30, a tension detection unit 32, and an upper die guide 34. The wire electrode 12, which has not yet been used, is wound around the wire bobbin 24. The torque motor 26 applies a torque to the wire bobbin 24. The brake shoe 28 applies a braking force by friction to the wire electrode 12. The brake motor 30 applies a brake torque with respect to the brake shoe 28. The tension detection unit 32 detects a magnitude of the tensile strength of the wire electrode 12. The upper die guide 34 guides the wire electrode 12 upwardly of the workpiece.

The collecting system 22 is equipped with a lower die guide 36, a pinch roller 38, a feed roller 40, a torque motor 42, and a collection box 44. The lower die guide 36 guides the wire electrode 12 downwardly of the workpiece. The pinch roller 38 and the feed roller 40 can grip the wire electrode 12. The torque motor 42 applies a torque to the feed roller 40. The collection box 44 collects the wire electrode 12 which has been conveyed using the pinch roller 38 and the feed roller 40.

The main machine body 14 includes a work-pan 46 capable of storing a dielectric working fluid. The dielectric working fluid is a liquid used during machining. Examples of the dielectric working fluid include deionized water. The work-pan 46 is placed on a base portion 48. The upper die guide 34 and the lower die guide 36 are arranged in the work-pan 46, and the workpiece is placed between the upper die guide 34 and the lower die guide 36. The upper die guide 34, the lower die guide 36, and the workpiece are immersed in dielectric working fluid stored in the work-pan 46.

The upper die guide 34 has a support portion 34a that supports the wire electrode 12, and the lower die guide 36 has a support portion 36a that supports the wire electrode 12. The lower die guide 36 includes a guide roller 36b. The guide roller 36b guides the wire electrode 12 to the pinch roller 38 and the feed roller 40 while changing the orientation of the wire electrode 12.

The upper die guide 34 ejects a clean dielectric working fluid free from sludge (cutting chips) toward the electrode gap between the wire electrode 12 and the workpiece. This makes it possible to fill the electrode gap with the clean fluid suitable for machining, and prevent a reduction in machining accuracy due to sludge generated during machining. The lower die guide 36 may also eject a clean dielectric working fluid free from sludge (cutting chips) toward the electrode gap.

The dielectric fluid unit 16 is a device that removes sludge generated in the work-pan 46 and controls the liquid quality of the dielectric working fluid by adjusting electric resistivity, temperature and the like. The dielectric working fluid whose liquid quality is controlled by the dielectric fluid unit 16 is returned to the work-pan 46, and is ejected from at least the upper die guide 34.

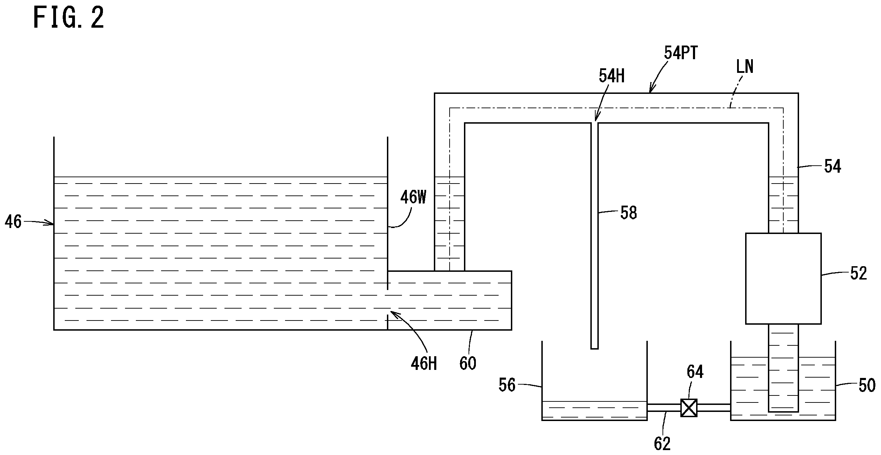

FIG. 2 is a schematic diagram showing a configuration of a part of the dielectric fluid unit 16. The dielectric fluid unit 16 includes a storage tank 50, a pump 52, an inlet pipe 54, an outlet fluid storage tank 56, and an outlet pipe 58.

The storage tank 50 stores the liquid supplied by the pump 52. The storage tank 50 may be a sewage tank that stores the working fluid (sewage) containing sludge. The storage tank 50 may be a clean water tank that stores the working fluid (clean water) that has passed through a filter for removing sludge from the sewage tank.

The pump 52 pumps up the liquid stored in the storage tank 50 and supplies the pumped liquid to the downstream side. The pump 52 is driven under the control of the control device 18. For example, after receiving a machining start command, the control device 18 drives the pump 52 until the sensor detects that the height of the water level of the liquid stored in the work-pan 46 has reached a predetermined value.

The inlet pipe 54 introduces the liquid supplied by the pump 52 into the work-pan 46. One end of the inlet pipe 54 is connected to an output end of the pump 52. Another end of the inlet pipe 54 is connected to a coupling mechanism 60. The coupling mechanism 60 communicates with the inlet pipe 54 and a hole 46H penetrating a sidewall 46W of the work-pan 46. The coupling mechanism 60 can store the liquid flowing through the inlet pipe 54.

The inlet pipe 54 has a pipe portion 54PT that is higher than a maximum height of the water level allowed in the work-pan 46. At the maximum height, the water level has a maximum value of the water level height. The pipe portion 54PT may be higher than the upper end of the work-pan 46 (see FIG. 2). The pipe portion 54PT may be disposed horizontally (see FIG. 2), or at least a part of the pipe portion 54PT may be inclined. The maximum value of the water level height allowed in the work-pan 46 is a fixed value determined in advance in accordance with the capacity of the work-pan 46 and the like, and the maximum water level height is lower than the height of the upper end of the work-pan 46. The coupling mechanism 60 is provided at a position lower than the maximum height. When a workpiece is machined, the upper die guide 34 (FIG. 1) is disposed at a position lower than the maximum height of the water level allowed in the work-pan 46. The upper die guide 34 is moved by the control device 18 controlling a motor for driving the upper die guide 34.

The pipe portion 54PT is provided with a through hole 54H penetrating a pipe wall of the inlet pipe 54. The through hole 54H is provided on the gravity direction side (downside) of the inlet pipe 54 relative to a virtual center line LN passing through the cross-sectional center of the inlet pipe 54. A part of the through hole 54H may be located on a side opposite to the gravity direction side (upside) relative to the virtual center line LN. Further, the through hole 54H may be provided at an intermediate position of the inlet pipe 54 or may be provided at a position other than the intermediate position (see FIG. 2).

A cross-sectional area of the through hole 54H may be the same as or different from a cross-sectional area of a flow path (hollow portion) of the pipe portion 54PT. When the cross-sectional area of the through hole 54H is different from the cross-sectional area of the flow path of the pipe portion 54PT, the cross-sectional area of the through hole 54H is preferably smaller than the cross-sectional area of the flow path of the pipe portion 54PT.

The outlet fluid storage tank 56 stores the liquid flowing out from the through hole 54H. The outlet fluid storage tank 56 may be provided on the gravity direction side (downside) relative to the work-pan 46 (see FIG. 2), or may be provided on the same surface as an installation surface on which the work-pan 46 is installed. The outlet fluid storage tank 56 may be provided on the same surface as an installation surface on which the storage tank 50 is installed (see FIG. 2), or may be provided on a surface different from the installation surface.

The outlet fluid storage tank 56 communicates with the storage tank 50 through a coupling pipe 62. The coupling pipe 62 is a pipe that couples the outlet fluid storage tank 56 and the storage tank 50, and a valve 64 is provided in the coupling pipe 62. The valve 64 opens and closes under the control of the control device 18. For example, from when a sensor detects that the storage amount of the liquid in the storage tank 50 is equal to or less than a predetermined amount, the control device 18 opens the valve 64 until a predetermined time elapses.

The outlet pipe 58 leads the liquid flowing out from the through hole 54H to the outlet fluid storage tank 56. The outlet pipe 58 extends in the gravity direction (downward). One end of the outlet pipe 58 is connected to the inlet pipe 54. Another end of the outlet pipe 58 is opened toward the inside of the outlet fluid storage tank 56.

A cross-sectional area of the flow path (hollow portion) of the outlet pipe 58 may be the same as or different from a cross-sectional area of the flow path (hollow portion) of the inlet pipe 54. In the case where the cross-sectional area of the flow path of the outlet pipe 58 is different from the cross-sectional area of the flow path of the inlet pipe 54, the cross-sectional area of the flow path of the outlet pipe 58 is preferably smaller than the cross-sectional area of the flow path of the inlet pipe 54. When the cross-sectional area of the through hole 54H provided in the inlet pipe 54 is smaller than the cross-sectional area of the flow path of the pipe portion 54PT, the cross-sectional area of the flow path of the outlet pipe 58 may be larger than the cross-sectional area of the flow path of the inlet pipe 54.

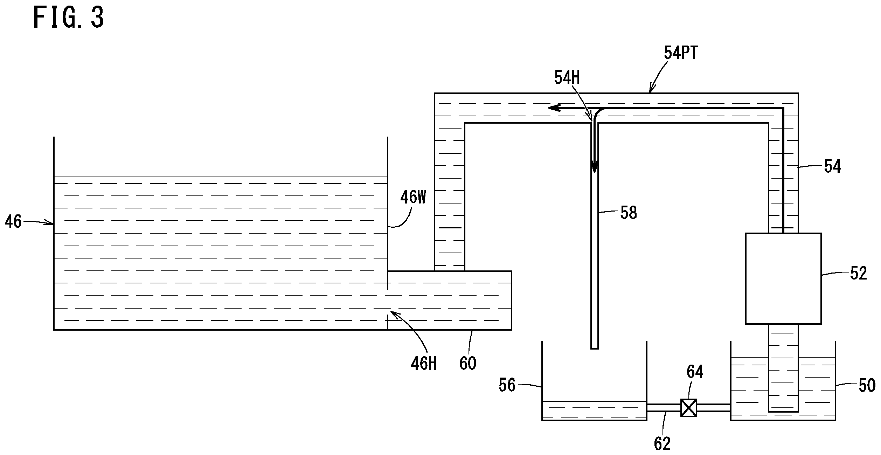

FIG. 3 is a diagram illustrating a state in which liquid is supplied to the work-pan 46. When the liquid stored in the storage tank 50 is supplied to the inlet pipe 54 by the pump 52, the liquid flows toward the downstream side of the pump 52.

A part of the liquid flowing through the inlet pipe 54 flows from the through hole 54H provided in the pipe portion 54PT to the outlet pipe 58. The liquid that does not flow into the outlet pipe 58 flows into the work-pan 46 from the hole 46H provided in the sidewall 46W of the work-pan 46 through the coupling mechanism 60. On the other hand, the liquid flowing into the outlet pipe 58 flows into the outlet fluid storage tank 56. The liquid flowing into the outlet fluid storage tank 56 is returned to the storage tank 50 through the coupling pipe 62 when the valve 64 is opened by the control device 18.

In the present embodiment, the pipe portion 54PT of the inlet pipe 54 is higher than the maximum height of the water level allowed in the work-pan 46. Therefore, when the pump 52 is stopped, the liquid filling the flow path (hollow portion) of the pipe portion 54PT falls from the through hole 54H by its own weight. As a result, air is accumulated in the flow path of the pipe portion 54PT (see FIG. 2). Therefore, the backflow from the work-pan 46 can be suppressed by the air accumulated in the flow path of the pipe portion 54PT. Thus, according to the present embodiment, it is possible to suppress the backflow of the liquid from the work-pan 46 without providing a check valve.

When the pipe portion 54PT is higher than the upper end of the work-pan 46, the speed at which air accumulates in the flow path of the pipe portion 54PT can be increased as compared with the case where the pipe portion 54PT is lower than the upper end of the work-pan 46.

In addition, when the through hole 54H is provided on the gravity direction side relative to the virtual center line LN, the liquid filling the flow path (hollow portion) of the pipe portion 54PT can be efficiently caused to flow out from the through hole 54H by the own weight of the liquid when the pump 52 is stopped.

In addition, when the cross-sectional area of the through hole 54H is smaller than the cross-sectional area of the flow path (hollow portion) of the pipe portion 54PT, the liquid flowing toward the work-pan 46 through the pipe portion 54PT is unlikely to flow out from the through hole 54H. That is, when the liquid is supplied from the storage tank 50 to the work-pan 46, the amount of the liquid flowing out from the through hole 54H can be reduced.

In the present embodiment, the outlet fluid storage tank 56 that stores the liquid flowing out from the through hole 54H is provided. Accordingly, the wall portion of the outlet fluid storage tank 56 reduces scattering of the liquid flowing out from the through hole 54H of the through hole to the outside. Therefore, it is possible to suppress the liquid flowing out from the through hole 54H from flowing out to the unintended periphery. The outlet fluid storage tank 56 need not necessarily be provided.

In the present embodiment, the outlet fluid storage tank 56 and the storage tank 50 that stores the liquid supplied by the pump 52 are coupled to each other by the coupling pipe 62. Thus, the liquid stored in the outlet fluid storage tank 56 can be returned to the storage tank 50, and the waste of the liquid supplied to the work-pan 46 can be reduced. The coupling pipe 62 need not necessarily be provided. When the coupling pipe 62 is not provided, the valve 64 provided in the coupling pipe 62 is not provided as well.

In addition, in the present embodiment, the outlet pipe 58 is provided. The outlet pipe 58 is connected to the inlet pipe 54 and leads the liquid flowing out from the through hole 54H to the outlet fluid storage tank 56. Accordingly, compared to the case where the outlet pipe 58 is not provided, it is possible to reduce scattering of the liquid flowing out from the through hole 54H. When the cross-sectional area of the flow path (hollow portion) of the outlet pipe 58 is smaller than the cross-sectional area of the flow path (hollow portion) of the inlet pipe 54, the liquid flowing toward the work-pan 46 through the pipe portion 54PT is unlikely to flow out from the through hole 54H. That is, when the liquid is supplied from the storage tank 50 to the work-pan 46, the amount of the liquid flowing out from the through hole 54H can be reduced. The outlet pipe 58 need not necessarily be provided.

### [Modifications]

The above-described embodiment may be modified in the following manner.

In the embodiment, the electrical discharge machine 10 is a wire electrical discharge machine that machines a workpiece by an electric discharge generated in an electrode gap between the wire electrode 12 and the workpiece. However, the electrical discharge machine 10 may be a die sinking electrical discharge machine that machines a workpiece by electric discharge generated in the electrode gap between an electrode for die sinking and the workpiece. When the electrical discharge machine 10 is a die sinking electrical discharge machine, the supplying system 20 and the collecting system 22 are not provided. In this case, a table for fixing the workpiece and an electrode for die sinking are disposed in the work-pan 46. Also, an actuator for relatively moving the table and the electrode for die sinking is provided, and the actuator is controlled by a control device 18.

### [Invention That Can Be Grasped from the Embodiment and Modifications]

The invention that is capable of being grasped from the above-described embodiment and the modifications will be described below.

The electrical discharge machine (10) that performs electrical discharge machining on the workpiece in the liquid stored in the work-pan (46), the electrical discharge machine including the pump (52) configured to supply the liquid, the inlet pipe (54) configured to introduce the liquid supplied by the pump into the work-pan, and the through hole (54H) configured to penetrate the pipe wall of the inlet pipe, wherein the inlet pipe includes the pipe portion (54PT) that is higher than the maximum height of the water level allowed in the work-pan, and the through hole is provided in the pipe portion.

Accordingly, the backflow of the liquid from the work-pan can be suppressed without providing a check valve. That is, the pipe portion of the inlet pipe is higher than the maximum height of the water level allowed in the work-pan. For this reason, when the pump is stopped, the liquid filling the flow path of the pipe portion falls from the through hole by its own weight, and air is accumulated in the flow path of the pipe portion. Therefore, the backflow from the work-pan can be suppressed by the air accumulated in the flow path of the pipe portion. In this way, the backflow of the liquid from the work-pan can be suppressed without providing a check valve.

The pipe portion may be higher than the upper end of the work-pan. With this configuration, it is possible to increase the speed at which the air accumulates in the flow path of the pipe portion as compared with the case where the pipe portion is lower than the upper end of the work-pan.

The through hole may be provided on the gravity direction side of the inlet pipe relative to the virtual center line (LN) passing through the cross-sectional center of the inlet pipe. With this configuration, the liquid filling the flow path of the pipe portion when the pump is stopped can be efficiently made flow out from the through hole by the own weight of the liquid.

The cross-sectional area of the through hole may be smaller than the cross-sectional area of the flow path of the pipe portion. With this configuration, the amount of liquid diverted from the through hole can be reduced when the liquid is flowing into the work-pan through the pipe portion.

The electrical discharge machine may further include the outlet fluid storage tank (56) configured to store the liquid flowing out from the through hole. With this configuration, it is possible to reduce scattering of the liquid flowing out from the through hole to the surroundings.

The electrical discharge machine may further include the outlet pipe (58) connected to the inlet pipe and configured to guide the liquid flowing out from the through hole to the outlet fluid storage tank. With this configuration, it is possible to reduce scattering of the liquid flowing out from the through hole to the surroundings.

The cross-sectional area of the flow path of the outlet pipe may be smaller than the cross-sectional area of the flow path of the inlet pipe. With this configuration, the amount of liquid diverted from the through hole can be reduced when the liquid is flowing into the work-pan through the pipe portion.

The electrical discharge machine may further include the storage tank (50) configured to store the liquid to be supplied by the pump, and the coupling pipe (62) configured to couple the outlet fluid storage tank and the storage tank. With this configuration, the liquid stored in the outlet fluid storage tank can be returned to the storage tank, and the waste of the liquid supplied to the work-pan can be reduced.

## Claims

1. An electrical discharge machine (10) that performs electrical discharge machining on a workpiece in a liquid stored in a work-pan (46), the electrical discharge machine comprising:
a pump (52) configured to supply the liquid;
an inlet pipe (54) configured to introduce the liquid supplied by the pump into the work-pan; and
a through hole (54H) configured to penetrate a pipe wall of the inlet pipe,
wherein the inlet pipe includes a pipe portion (54PT) that is higher than a maximum height of a water level allowed in the work-pan, and
the through hole is provided in the pipe portion.

2. The electrical discharge machine according to claim 1, wherein the pipe portion is higher than an upper end of the work-pan.

3. The electrical discharge machine according to claim 1 or 2, wherein the through hole is provided on a gravity direction side of the inlet pipe relative to a virtual center line (LN) passing through a cross-sectional center of the inlet pipe.

4. The electrical discharge machine according to any one of claims 1 to 3, wherein a cross-sectional area of the through hole is smaller than a cross-sectional area of a flow path of the pipe portion.

5. The electrical discharge machine according to any one of claims 1 to 4, further comprising an outlet fluid storage tank (56) configured to store the liquid flowing out from the through hole.

6. The electrical discharge machine according to claim 5, further comprising an outlet pipe (58) connected to the inlet pipe and configured to guide the liquid flowing out from the through hole to the outlet fluid storage tank.

7. The electrical discharge machine according to claim 6, wherein a cross-sectional area of a flow path of the outlet pipe is smaller than a cross-sectional area of a flow path of the inlet pipe.

8. The electrical discharge machine according to any one of claims 5 to 7, further comprising:
a storage tank (50) configured to store the liquid to be supplied by the pump; and
a coupling pipe (62) configured to couple the outlet fluid storage tank and the storage tank.
